# EUROPEAN PATENT SPECIFICATION

(11) **EP 1 204 326 B1**
(45) Date of publication and mention of the grant of the patent: **06.04.2005**
(21) Application number: 00962345.5
(22) Date of filing: 17.08.2000
(51) Int. Cl.: A21D 8/04, A21D 2/16, A21D 10/04

(54) **LIQUID BREAD IMPROVING COMPOSITION**
FLÜSSIGES BROTVERBESSERUNGSMITTEL
COMPOSITION LIQUIDE AMELIORANT LA PANIFICATION

(30) Priority: 17.08.1999 EP 99202672
(43) Date of publication of application: 15.05.2002
(73) Proprietor: DSM IP Assets B.V., 6411 TE Heerlen (NL)
(72) Inventor: SCHUTTE, Ernst, Jan, NL-5237 KW Den Bosch (NL); SCHOONEVELD-BERGMANS, Margot, Elisabeth, Françoise, NL-2625 KK Delft (NL); MULDER, Hermannes, Marrien, NL-3363 XR Delft (NL); NOBEL, Leo, NL-3284 XD Zuid-Beijerland (NL)
(74) Representative: Matulewicz, Emil Rudolf Antonius
(86) International application number: PCT/EP2000/008146
(87) International publication number: WO 2001/011974

(56) References cited:
- EP-A- 0 246 554
- EP-A- 0 913 468
- WO-A-96/13980
- WO-A-99/48377

## Description

The present invention relates to liquid bread improving compositions and processes for making a dough and a baked bread using said compositions.

Several compositions have been developed for the easy handling and pumping of liquid bread-improving compositions. EP-A-572051 discloses a composition comprising 75-95% vegetable oil, 1-5% of a hydrogenated oil and 1-5% of a partly hydrogenated oil, 2-20% emulsifiers including at least diacetyl tartaric esters from saturated or unsaturated mono- and/or diglycerides (i.e. DATA esters) and enzyme. The average particle size of the particles present in the composition is less than 50µm in order to keep this composition storage-stable. The disadvantage of this composition is the complexity of the mixture and the sophisticated production procedure. WO 99/48377 discloses stable suspensions of a particulate component. The enzyme containing bread improving compositions disclosed therein have high oil contents (>80% of the final composition), low fat and/or emulsifier (≤2%) and enzyme (up to 10%). It is further stated that the bread improver compositions preferably contain either <2% or >20% emulsifier. We have found that with fat and/or emulsifier contents of <2% we were unable to obtain stable liquid bread improving compositions that contain 20-45% NaCl.

The present invention provides liquid bread improving compositions comprising 30-70% of a vegetable triglyceride oil, 2.5-15% of fat and/or emulsifier, enzyme and at least one other bread improving ingredient. In the liquid bread improving compositions of the present invention, the enzyme particles have a particle size larger than the enzyme particles described in prior art processes are used. Other large size particles which can be used are crystals of other bread improving ingredients such as salt (e.g. NaCl) or sugars (e.g. dextrose). Particle size can be determined by sieving. The liquid bread improving compositions of the present invention are easy to produce and fulfil all the demands with respect to their storage stability which means that the liquid does not separate into two distinct phases including a precipitate (after storage for 2 months at 5 and 30°C). Another advantage of such liquid bread improving compositions is that they can be (automatically) dosed to the basic dough ingredients for bread production: flour, active yeast (baker's yeast e.g. cream, dry, instant or compressed yeast) and water.

In one aspect, the invention provides a storage stable liquid bread improving composition comprising:
1. 30-70 wt% of a vegetable triglyceride oil;
2. 2.5-15 wt% of fat and/or emulsifier;
3. 0.05-5 wt% of enzyme particles whereby 70% of the particles have a size of more than 50 µm;
4. 5-50 wt% of other bread improving ingredients;

The liquid bread improving composition comprises 30-70%. more preferably 45-60%, most preferably 50-60% of vegetable triglyceride oil such as soy oil, palm oil or rape seed oil; most preferred is soy oil. The vegetable oil is in a liquid form at temperatures of 5°C and higher. The liquid bread improving composition comprises further 2.5-15 wt% of fat and/or emulsifier. Preferably, the liquid bread improving composition comprises ≤ 5% fat and ≤15%, more preferably ≤ 10% and most preferably 2-10% of emulsifier. Suitable fats are hydrogenated palm or soy fat. Suitable emulsifiers are calcium stearoyl lactylate (E482), sodium stearoyl lactylate (E481) or mono- and diglycerides such as E471 or mixtures thereof. Most preferred is calcium stearoyl lactylate (E482).

The liquid bread improving composition comprises 0.05-5 wt% of enzyme particles, preferably granulated enzyme particles. More than 70% of the granulated enzymes have a particle size of more than 50µm, more preferably 90% have a size of 50-200 µm. The enzyme can be an α-amylase, a protease, an amyloglucosidase, a (phospho)lipase, a glucose oxidase, a hemicellulase or combinations thereof.

The liquid bread improving composition further comprises 5-50 wt%, more preferably 10-45 wt% and most preferably 20-45 wt% of one or more other bread-improving ingredients. By other bread-improving ingredients are meant in the present application, those ingredients besides components 1 to 3 listed above and the basic dough ingredients (flour, water and yeast). These ingredients have an additional effect on the dough or bread and can be selected from the following components: salt, preferably NaCl, for taste - the salt crystals may have a size between 125-1000 µm, more preferably 80% have a size between 250-600 µm; flour of cereals or leguminous plants e.g. soy flour (active soy flour contains lipoxygenase, having a bleaching effect), malt flour (for dark colouring of the bread or taste) and wheat flour; wheat gluten; milk constituents such as lactose, whey powder or whey permeate; preservatives such as sorbic acid or sodium diacetate; sugars; flavours; ascorbic acid; inactivated dry yeast. A preferred embodiment is a liquid bread improving composition comprising 20-45% NaCl. Another preferred embodiment is a liquid bread improving composition comprising 20-45% sugar such as dextrose.

The liquid bread improving composition can be easily made by adding the ingredients into a production kettle, starting with the triglyceride oil followed by the emulsifier and the fat. The mixture of oil, emulsifier and fat is heated to a temperature between 50-80°C, more preferably to approximately 75°C. Subsequently, the mixture, after complete melting of the fat and/or emulsifier, can be cooled down to e.g. 20-25°C using a plate heat exchanger. Optionally the mixture is subsequently mixed e.g. for 1-4 hours. This mixing improves the storage stability of the final composition. Rapid cooling improves the physical stability of the final composition and a cooling time of 10-30 min., preferably 15 min is therefore chosen. The stirring is stopped and the mass is left to rest for 10 min. Finally remaining (solid) bread improver ingredients or dough ingredients are added and optionally mixed for example approximately 5-15 minutes, after which the product is filled into containers for storage.

In another aspect, the invention provides a process for making a dough which comprises mixing flour, yeast, water and the liquid bread-improving composition of the present invention. In a further aspect, the invention provides a process for producing a bread which comprises a process for making a dough as described above and subsequently baking the dough. The dough recipe for white bread may consist of wheat flour (3500 g), fresh yeast (70 g), Liquid Bread Improver (LBI) for white bread (175 g) and water (1840 g). The ingredients are mixed in a standard spiral mixer for 350 rounds in the first gear, followed by 1200 rounds in the second gear. The temperature of the dough was kept at approximately 28°C. The dough is moulded into ball shapes of 890 gram, prior to proofing for 40 min. Subsequently, the dough is moulded for tin bread and final proofing occurs for 70 min at 34±2 °C and 85±5% RH. Baking is performed for 30 min at 270°C top temperature and 280°C bottom temperature. The procedure for wholemeal bread is essentially the same, with the alteration that 3500 g of wholemeal flour is used, liquid bread improver for wholemeal bread is used, the proofing occurs in ball shaped moulds of 900 g, and baking is performed for 40 min. The procedure for various types of universal breads may be essentially the same as the above described procedure for white bread, however it may differ from this procedure in the addition of extra NaCl (70 g), since this is not present in the LBI-universal. Moulding, proofing and baking is the same as for white bread.

All Fermizyme® and Levuraline® products referred to in the following examples are products from DSM Bakery Ingredients, Delft, The Netherlands. The Fermizyme products were of the BG type meaning that at least 80% of the particles have a size between 63-200 µm as determined by sieving. Fermizyme® and Levuraline® are registered trademarks of DSM N.V.

### Example 1

### Liquid bread improver for the preparation of white bread (5 wt% dosage of flour).

Soy oil (53 wt%), hydrogenated palm fat (1 wt%) and Emulsifier E482 (5 wt%) were heated to 75°C and mixed to form a homogeneous solution. Subsequently, the mixture was cooled to 22°C. NaCl (41 wt%), Fermizyme® H2000 (containing fungal α-amylase and hemicellulase; 0.02 wt%), Fermizyme® P500 (containing fungal α-amylase; 0.02 wt%) and Levuraline® (inactivated dry yeast; 0.02 wt%) were added after which the composition was mixed for 5 minutes. The mixture was storage stable for two months at 5 and 30°C.

### Example 2

### Liquid bread improver for wholemeal bread (5 wt% dosage of flour).

Soy oil (50 wt%), hydrogenated palm fat (1 wt%) and emulsifier E482 (6.0 wt%), were heated to 75°C and mixed to form a homogeneous solution. Subsequently, the mixture was cooled to 22°C. NaCl (41 wt%), malt flour (1.5 wt%), ascorbic acid (0.02 wt%), Fermizyme® H2000 (0.08 wt%), Fermizyme® P500 (0.06 wt%), and Levuraline® (0.02 wt%) and Fermizyme® GO 1500 (containing glucose oxidase; 0.04 wt%) were added after which the composition was mixed for 5 minutes. The mixture was storage stable for two months at 5 and 30°C.

### Example 3

### Liquid bread improver for wholemeal bread (6 wt% dosage on flour).

Soy oil (58 wt%), hydrogenated palm fat (1.6 wt%) and emulsifier E471 (Grindsted Mono-di HA 40-1; 1.8 wt%) were heated to 75°C and mixed to form a homogeneous solution. Subsequently, the mixture was quickly cooled to 25°C and slowly agitated for 4 hours. After resting for 16 hours, NaCl (33 wt%), wheat gluten (2.5 wt%), malt flour (1.6 wt%), ascorbic acid (0.05 wt%), Fermizyme® B100 (containing bacterial α-amylase; 0.0017 wt%), Fermizyme® H2000 (0.067 wt%), Fermizyme® AG800 (containing amyloglucosidase; 0.05 wt%) and Fermizyme® GO1500 (0.033 wt%) were added after which the composition was mixed for 5 minutes. The mixture was storage stable for two months at 5° and 30°C.

### Example 4

### Liquid bread improver for white bread (short process) (6 wt% dosage on flour).

Soy oil (55 wt%) and hydrogenated palm fat (2.8 wt%) were heated to 75°C and mixed to form a homogeneous solution. Subsequently, the mixture was cooled to 25°C, and slowly agitated for 4 hours. After resting for 16 hours, soy flour (8.3 wt%), NaCl (33 wt%), Fermizyme® B100 (0.0014 wt%), Fermizyme® H2000 (0.083 wt%), Fermizyme® AG800 (0.066 wt%), Levuraline® (0.066 wt%) and ascorbic acid (0.017 wt%) were added after which the composition was mixed for 5 minutes. The mixture was storage stable for two months at 5° and 30°C. A liquid bread improver for white bread, containing soy oil (56.8 wt%) and hydrogenated palm fat (1.0 wt%) was not storage stable. After two weeks heterogeneity in the distribution of the solid particles became visible, which resulted in sedimentation after 1 month.

### Example 5

### Liquid bread improver for wholemeal bread (6 wt% dosage on flour).

Rapeseed oil (59 wt%), hydrogenated palm fat (3.7 wt%) and emulsifier E482 (2.3 wt%) were heated to 70°C and mixed to form a homogeneous solution. Subsequently, the mixture was cooled to 25°C, and slowly agitated for 4 hours. After resting for 16 hours, malt flour (1.7 wt%), NaCl (33 wt%), Fermizyme® B100 (0.0017 wt%), Fermizyme® H2000 (0.067 wt%), Fermizyme® AG800 (0.050 wt%), Fermizyme® GO1500 (0.033 wt%) and ascorbic acid (0.050 wt%) were added after which the composition was mixed for 5 minutes. The mixture was storage stable for two months at 5° and 30°C.

### Example 6

### Liquid bread improver for white bread (5 wt% dosage on flour).

Soy oil (53 wt%), hydrogenated soy fat (5 wt%) and emulsifier E471 (2 wt%) were heated to 75°C and mixed to form a homogeneous solution. Subsequently, the mixture was quickly cooled to 25°C, and slowly agitated for 4 hours. After resting for 16 hours, NaCl (41 wt%), Fermizyme® P500 (0.02 wt%), Fermizyme® H2000 (0.02 wt%) and Levuraline® (0.02 wt%) were added after which the composition was mixed for 5 minutes. The mixture was storage stable for two months at 5° and 30°C.

### Example 7

### Liquid bread improver for various types of bread (3 wt% dosage on flour).

Soy oil (53 wt%), hydrogenated palm fat (2 wt%) and emulsifier E471 (2 wt%) were heated to 75°C and mixed to form a homogeneous solution. Subsequently, the mixture was quickly cooled to 25°C. Dextrose (20 wt%), dried milk constituents (17 wt%), wheat flour (7 wt%), Fermizyme® H2000 (0.07 wt%), Fermizyme® B100 (0.0025 wt%), Fermizyme® GO1500 (0.07 wt%), Levuraline® (0.2 wt%) and ascorbic acid (0.03 wt%) were added after which the composition was mixed for 5 minutes. The mixture was storage stable for two months at 5° and 30°C.

## Claims

1. A liquid bread improving composition comprising
- 30-70 wt% of a vegetable triglyceride oil;
- 2.5-15 wt% of fat and/or emulsifier;
- 0.05-5 wt% of enzyme particles whereby 70% of the particles have a size of more than 50 µm;
- 5-50 wt% of other bread improving ingredients;

2. A liquid bread improving composition according to claim 1 comprising ≤5% fat and ≤15% emulsifier.

3. A liquid bread improving composition according to anyone of claims 1 or 2 comprising 2-10% emulsifier.

4. A liquid bread improving composition according to anyone of the preceding claims comprising 20-45% NaCl.

5. A liquid bread improving composition according to anyone of the preceding claims comprising 20-45% sugar.

6. A process for making a dough which comprises mixing flour, yeast, water, optionally salt and the liquid bread-improving composition described in claims 1-5.

7. A process for producing a bread which comprises a process for making a dough according to claim 6 and subsequently baking the dough.

## Patentansprüche

1. Flüssiges Brotverbesserungsmittel, enthaltend
- 30 - 70 Gew.% eines pflanzlichen Triglyceridöls,
- 2,5 - 15 Gew.% Fett und/oder Emulgator,
- 0,05 - 5 Gew.% Enzymteilchen, wobei 70 % der Teilchen eine Größe von über 50 µm aufweisen,
- 5 - 50 Gew.% andere Brotverbesserungsbestandteile.

2. Flüssiges Brotverbesserungsmittel nach Anspruch 1, enthaltend ≤ 5 % Fett und ≤ 15 % Emulgator.

3. Flüssiges Brotverbesserungsmittel nach Anspruch 1 oder 2, enthaltend 2 - 10 % Emulgator.

4. Flüssiges Brotverbesserungsmittel nach einem der vorstehenden Ansprüche, enthaltend 20 - 45 % NaCl.

5. Flüssiges Brotverbesserungsmittel nach einem der vorstehenden Ansprüche, enthaltend 20 - 45 % Zucker.

6. Verfahren zum Herstellen eines Teigs, welches das Mischen von Mehl, Hefe, Wasser, gegebenenfalls Salz und des in den Ansprüche 1 bis 5 beschriebenen flüssigen Brotverbesserungsmittels beinhaltet.

7. Verfahren zum Herstellen eines Brots, wobei das Verfahren den Vorgang der Teigherstellung nach Anspruch 6 und das nachfolgende Backen des Teigs beinhaltet.

## Revendications

1. Composition liquide améliorant la panification comprenant :
- de 30 à 70 % en poids d'une huile végétale triglycéride ;
- de 2,5 à 15 % en poids d'une graisse et/ou d'un émulsifiant ;
- de 0,05 à 5 % en poids de particules d'enzymes dans lesquelles 70 % des particules ont une taille supérieure à 50 µm
- de 5 à 50 % en poids d'autres ingrédients améliorant la panification.

2. Composition liquide améliorant la panification selon la revendication 1, comprenant ≤ 5 % de graisse et ≤ 15 % d'émulsifiant.

3. Composition liquide améliorant la panification selon l'une quelconque des revendications 1 ou 2, comprenant de 2 à 10 % d'émulsifiant.

4. Composition liquide d'amélioration de la panification selon l'une quelconque des revendications précédentes, comprenant de 20 à 45 % de NaCl.

5. Composition liquide d'amélioration de la panification selon l'une quelconque des revendications précédentes, comprenant de 20 à 45 % de sucre.

6. Procédé de fabrication d'une pâte comprenant le fait de mélanger de la farine, de la levure, de l'eau, optionnellement du sel et la composition liquide d'amélioration de la panification selon l'une des revendications 1 à 5.

7. Procédé de production de pain comprenant un procédé de fabrication d'une pâte selon la revendication 6, puis ensuite comprenant le fait de faire cuire la pâte.
